# EUROPÄISCHE PATENTANMELDUNG

(11) **EP 1 659 366 A2**
(43) Veröffentlichungstag der Anmeldung: **24.05.2006**
(21) Anmeldenummer: 05110489.1
(22) Anmeldetag: 08.11.2005
(51) Int. Cl.: G01C 21/20, A01B 79/00

(54) **Verfahren zur Abspeicherung von Markierungen in einem Kartierungssystem**

(30) Priorität: 15.11.2004 US 989171
(71) Anmelder: DEERE & COMPANY, Moline, Illinois 61265-8098 (US)
(72) Erfinder: Duncan, Jerry R, Bettendorf, IA Iowa 52722 (US); Balentine, Bruce E, Denton, TX Texas 76201 (US); Newendorp, Bruce C, Cedar Falls, IA Iowa 50613 (US); Sommer, Mark S, East Moline, IL Illinois 61244 (US); Smith, Wayne F, Clive, IA Iowa 50325 (US); Mayfield, Robert L, Cedar Falls, IA Iowa 50613 (US)
(74) Vertreter: Holst, Sönke

(57) **Zusammenfassung**

Die Erfindung bezieht sich auf ein Verfahren zur Abspeicherung von Markierungen in einem Kartierungssystem, das über ein Gelände bewegbar ist und eine Ortsdaten erzeugende geographische Ortsbestimmungseinheit, z. B. eine GPS-Einheit (16), mehrere Dateneingabeschnittstellen (22, 28, 30) und eine Verarbeitungseinheit (14) umfasst, die mit der Ortsbestimmungseinheit und den Dateneingabeschnittstellen (22, 28, 30) verbunden ist und eine Karte erzeugt, mit folgenden Schritten:
als Reaktion auf den Beginn einer Markierungsdateneingabe mittels einer der Dateneingabeschnittstellen werden gegenwärtige Zeitdaten abgespeichert,
nach Vervollständigung der Markierungsdateneingabe mittels der Dateneingabeschnittstelle (22, 28, 30) werden die Markierungsdaten analysiert und erhaltene Markierungsdaten abgespeichert,
kompensierte Zeitdaten werden abhängig von den abgespeicherten gegenwärtigen Zeitdaten und einer Zeitverzögerung abgespeichert, die davon abhängt, welche der Dateneingabeschnittstellen benutzt wurde,
abhängig von den kompensierten Zeitdaten werden kompensierte Ortsdaten bestimmt, und
die kompensierten Ortsdaten werden verknüpft mit den gespeicherten erhaltenen Markierungsdaten abgespeichert.

## Beschreibung

Die Erfindung betrifft ein Verfahren und ein System zur Abspeicherung geographischer Ortsdaten und mit Orten verknüpfter Informationen, wie es während der Kartierung eines landwirtschaftlichen Felds durchgeführt bzw. betrieben wird.

Wenn für Präzisionslandwirtschaftszwecke eine Feldkarte unter Verwendung eines Systems mit einem manuellen Eingabegerät erzeugt wird, verknüpft oder markiert bzw. "flagt" der Bediener ein Ereignis oder eine Beobachtung mit einer Information über den zugehörigen Ort auf der erzeugten Karte (wie eine Aufzeichnung der Orte mit Unkraut auf einer Ertragskarte). Ein Kartenerzeugungssystem mit einer Anzeige und einer komplexen Menühierarchie kann es erforderlich machen, dass der Bediener Tasten in einer bestimmten Reihenfolge drücken muss, und manche derartige Systeme zeichnen den Ort und die zugehörige Information erst dann auf, wenn der Bediener die manuelle Eingabe aller Informationen beendet hat. Es kann daher eine beträchtliche Zeitverzögerung zwischen dem Zeitpunkt, zu dem das Fahrzeug an dem betreffenden Ort war und dem Zeitpunkt geben, an dem der Ort und die zugeordnete Information aufgezeichnet werden. Wenn das Fahrzeug sich während dieser Zeit bewegt, werden sich die aufgezeichneten Ortskoordinaten vom aktuellen Ort unterscheiden und die erhaltenen Feldkarten werden ungenau sein.

Derartige Systeme sind auch fehleranfällig, da Bediener bei Verwendung der auf nieder zu drückenden Tasten beruhenden Schnittstelle vergessen können, ihre Markierungen zu setzen oder zu entfernen. Das hat unbefriedigende Feldkarten zur nachteiligen Folge. Auch ist die manuelle Eingabe von Markierungen während der Bedienung eines Mähdreschers oder einer anderen komplexen landwirtschaftlichen Maschine eine die Hände und Augen beschäftigende Aufgabe für den Bediener der Maschine, so dass der Bediener nicht immer, wenn es nötig wäre, die Zeit investieren kann, die nötigen Tasten zu drücken, um die gewünschte Ereignisinformation aufzuzeichnen.

Es wurden auch Systeme zur Markierung des Orts und zugehöriger Informationen vorgeschlagen, die eine automatische Spracherkennung verwenden. Ein Kartierungssystem mit einer Spracherkennungsschnittstelle erlaubt es dem Bediener, das System schnell anzuweisen, Ortsdaten und zugehörige Informationen für eine spätere Analyse auf einer Ertragskarte aufzuzeichnen. Während er Kommandos in eine Spracherkennungsschnittstelle spricht, kann der Bediener andere Aufgaben zeitgerecht durchführen. Derartige Systeme wurden von D. L. Dux, R. M. Strickland und D. R. Ess in "Generating Field Maps from Data collected by Speech Recognition", erschienen in ASAE Paper 991099, und von D. L. Dux, R. M. Strickland, D. R. Ess in und H. A. Diefes in "Comparison of Speech Recognition Products for Data Collection", erschienen in ASAE Paper 993186, beschrieben. Diese Veröffentlichungen beschreiben die Verwendung von GPS-Koordinaten, um Ortsmarkierungen auf einer Feldkarte zu platzieren und diskutieren auch die automatische Spracherkennung, um die spezifischen Ereignisse oder Informationen einzugeben, die mit den Markierungen verknüpft werden. Das Schwergewicht dieser Veröffentlichungen liegt darauf, die automatische Spracherkennung mobil zu machen und eine hohe Genauigkeit dieser Technologie sicher zu stellen.

Die US 5 870 689 A beschreibt ein Erkundungssystem für ein landwirtschaftliches Feld. Das System umfasst ein Fahrzeug wie einen Mähdrescher oder einen Traktor, der mit einem Werkzeug zur Bearbeitung des Felds und einem Sensor ausgestattet ist, der eine Eigenschaft, wie den Ertrag, erfasst. Das System umfasst weiterhin eine Eingabeeinrichtung zur Markierung sichtbarer Elemente auf dem Feld und einen Ortssignalerzeugungsschaltkreis. Das System umfasst eine Bedienerschnittstelle, die eine grafische Bedienerschnittstelle mit einer Cursorkontrolle (z. B. eine Maus, ein Joystick oder ein Vierwegeschalter), konfigurierbare Schalter (z. B. Drucktasten), eine Tastatur und eine Sprachkommunikationsschnittstelle aufweist. Eigenschaftsdaten werden mit den Orten verknüpft, an denen die Eigenschaft erfasst wurde und vom Bediener über die Eingabeeinrichtung eingegebene Erkundungsdaten, die z. b. sichtbare Elemente auf dem Feld repräsentieren, werden mit Daten hinsichtlich der Positionen der sichtbaren Elemente verknüpft. Die verknüpften Daten werden in einem Speicher abgelegt. Eine Anzeige kann eine Feldkarte einschließlich der erfassten Eigenschaften und sichtbarer Elemente anzeigen.

Bei diesen Datenaufzeichnungssystemen ergibt sich stets eine gewisse Verzögerung zwischen dem Zeitpunkt, an dem ein Bediener ein Merkmal auf einem Feld sieht und erkennt und dem Zeitpunkt, an dem die Information über das Merkmal eingegeben werden kann, sei es manuell oder mündlich. Wenn sich das Dateneingabesystem auf einem bewegenden Fahrzeug befindet, wird es sich während dieser Zeitverzögerung über eine bestimmte Entfernung bewegt haben und die aufgezeichneten Ortsdaten werden sich von dem Ort unterscheiden, an dem der Bediener das Merkmal zum ersten Mal gesehen hat, so dass die erzeugte Karte ungenau sein wird.

Weiterhin ist die Technologie der automatischen Spracherkennung unzuverlässig und erzeugt Fehler, wie wenn falsche Wörter gesprochen werden oder gesprochene Wörter vom Spracherkennungssystem missverstanden werden. Derartige Fehler werden normalerweise durch einen sich im Dialog mit dem Spracherkennungssystem befindlichen Bediener korrigiert, jedoch ist ein derartiger Dialog zeitaufwändig. Eine Korrektur von Fehlern bei fehlender Erkennung erfordert in der Regel eine Wiederholung. Sich nach längerer Zeit ergebende Lücken oder Fehler im Gedächtnis des Bedieners können sowohl bei manuellen als auch bei sprachbasierten Schnittstellen Eingabefehler zur Folge haben.

### Aufgabe der Erfindung

Die der Erfindung zu Grunde liegende Aufgabe wird darin gesehen, ein Kartierungssystem mit einer Markierungsfunktion und ein Verfahren zu dessen Betrieb bereitzustellen, das die Verzögerung zwischen dem Zeitpunkt, an dem ein Bediener ein Merkmal auf einem Feld sieht und dem Zeitpunkt ausgleicht, an dem die Information über das Merkmal eingegeben werden kann. Das System soll auch unterschiedliche Zeitverzögerungen ausgleichen können, die von der Art der Eingabe abhängen, insbesondere bei mündlicher oder manueller Eingabe.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird ein Kartierungssystem vorgeschlagen, das eine geographische Ortsbestimmungseinheit umfasst, um Ortsdaten bereitzustellen, die einen geographischen Ort repräsentieren, an dem sich das Fahrzeug jeweils befindet. Das System umfasst vorzugsweise auch ein Mikrofon und eine automatische Spracherkennungsschnittstelle, um von einem Bediener gesprochene Markierungsdaten erkennen zu können, und eine manuelle Schnittstelle zur manuellen Eingabe von Markierungsdaten. Eine Verarbeitungseinheit ist mit der Ortsbestimmungseinheit und den Schnittstellen verbunden, um von diesen Informationen zu erhalten, zu verarbeiten und abzuspeichern. Markierungsdaten beziehen sich auf vom Bediener identifizierte Merkmale, die mit den Orten verknüpft sind, an denen sie identifiziert wurden. Die Verarbeitungseinheit oder die Ortsbestimmungseinheit umfassen einen Timer oder eine Uhr zur Erzeugung von Zeitdaten. Wenn das Kartierungssystem über ein Gelände bewegt wird, speichert es fortlaufend Zeitdaten und zugehörige geographische Ortsdaten in einem Pufferspeicher zumindest für eine bestimmte Zeitdauer ab. Die Verarbeitungseinheit speichert als Reaktion auf den Beginn einer Eingabe von Markierungsdaten durch einen Bediener gegenwärtige Zeitdaten ab, die dem Zeitpunkt des Beginns der Eingabe der Markierungsdaten durch den Bediener entsprechen.

Nach Vervollständigung der Eingabe der Markierungsdaten durch den Bediener berechnet die Verarbeitungseinheit kompensierte Ortsdaten, die auf einer vorbestimmten Verzögerungszeit und den gespeicherten Zeitdaten beruhen. Die Verzögerungszeit hängt von der Art der genutzten Schnittstelle ab. Bei einer Spracheingabe ist die Zeitverzögerung in der Regel kleiner als bei einer manuellen Eingabe.

### Ausführungsbeispiel

In den Zeichnungen ist ein nachfolgend näher beschriebenes Ausführungsbeispiel der Erfindung dargestellt. Es zeigt:
- Fig. 1: ein vereinfachtes schematisches Diagramm eines Feldkartenerzeugungssystems, und
- Fig. 2: ein logisches Flussdiagramm, in dem ein von der in der Figur 1 dargestellten Verarbeitungseinheit ausgeführter Algorithmus dargestellt wird.

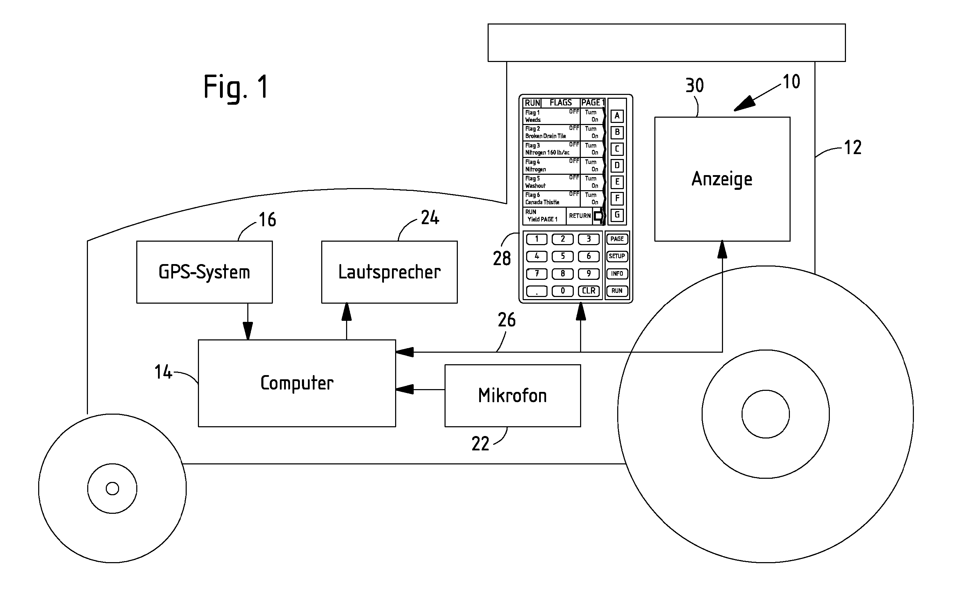

Es wird auf die Figur 1 verwiesen, in der ein Feldkartenerzeugungssystem oder Kartierungssystem 10 an einem Fahrzeug 12 in Form eines Traktors befestigt ist, das über eine Landfläche gefahren werden kann, wie ein Maisfeld oder ein unbearbeitetes Gelände, oder ein anderes Gebiet, einschließlich Wälder, Wasserflächen, gebirgiges Gebiet, oder ein Gelände unter Tage. Das System 10 umfasst eine Mikroprozessor-basierende Verarbeitungseinheit 14 in Form eines Computers, die fortlaufend aktualisierte Ortsdaten empfängt, vorzugsweise von einer konventionellen, kommerziell verfügbaren GPS-Einheit 16 oder von einem anderen Typ eines Ortsbestimmungssystems, wie einem Trägheitsführungssystem.

Das System 10 umfasst eine Sprachschnittstelle in Form eines Mikrofons 22, das mit der Verarbeitungseinheit 14 verbunden ist. Die Verarbeitungseinheit 14 kann ein Audiosignal an einen Lautsprecher 24 abgeben. Das System 10 umfasst außerdem eine manuelle Schnittstelle 28, die über eine Kommunikationsverbindung 26 mit der Verarbeitungseinheit 14 verbunden ist, wie eine Anzeige-, Steuer- und Eingabetasteneinheit 30 (vorzugsweise eine Einheit, wie die kommerziell verfügbare Greenstar-Einheit von John Deere). Zusätzlich oder alternativ kann die Verarbeitungseinheit 14 mit einer anderen Anzeigeeinheit 30 mit einem berührungsempfindlichen Bildschirm verbunden sein. Die Schnittstelle 28 ist vorzugsweise mit manuell betätigbaren Schnittstellen oder Eingabeelementen versehen, wie von Hand betätigbaren Tasten oder Schaltern zur Eingabe von Markierungen. Alternativ könnte das System 10 separate, allein stehende oder zugeordnete Tasten oder Schalter (nicht gezeigt) umfassen.

Die Verarbeitungseinheit 14 umfasst eine interne Software-Uhr oder einen Timer und einen Pufferspeicher (nicht gezeigt). Die Verarbeitungseinheit 14 speichert fortlaufend und wiederholend eine Vielzahl von Zeitwerten vom Timer und die GPS-Ortsdaten von der GPS-Einheit 16, die mit jedem Zeitwert verknüpft sind. Vorzugsweise werden die Zeitwerte und die Ortsdaten gespeichert oder erneuert oder aktualisiert, so dass der Puffer Daten für ein Zeitintervall enthält, die für die Aktivität eines Bedieners angemessen sind (z. B. die vorhergehenden 90 s zur Aufzeichnung einer Markierung während der Bedienung eines erntenden Mähdreschers).

Auf der Verarbeitungseinheit 14 läuft außerdem eine konventionelle Spracherkennungssoftware, um die Audiosignale vom Mikrofon 22 zu verarbeiten. Die Spracherkennungsfunktion wird vorzugsweise als Reaktion darauf initiiert, dass der Bediener in das Mikrofon 22 spricht. Alternativ könnte das System einen zum Sprechen zu betätigenden Knopf oder Schalter (nicht gezeigt) umfassen, der betätigt werden kann, um die Verarbeitungseinheit 14 darüber zu informieren, dass eine Spracheingabe kommen wird. Das System 10 könnte auch andere Subsysteme umfassen, wie eine Augenbewegungserfassung und -nachverfolgung, Fußpedale und Gestendetektoren (nicht gezeigt).

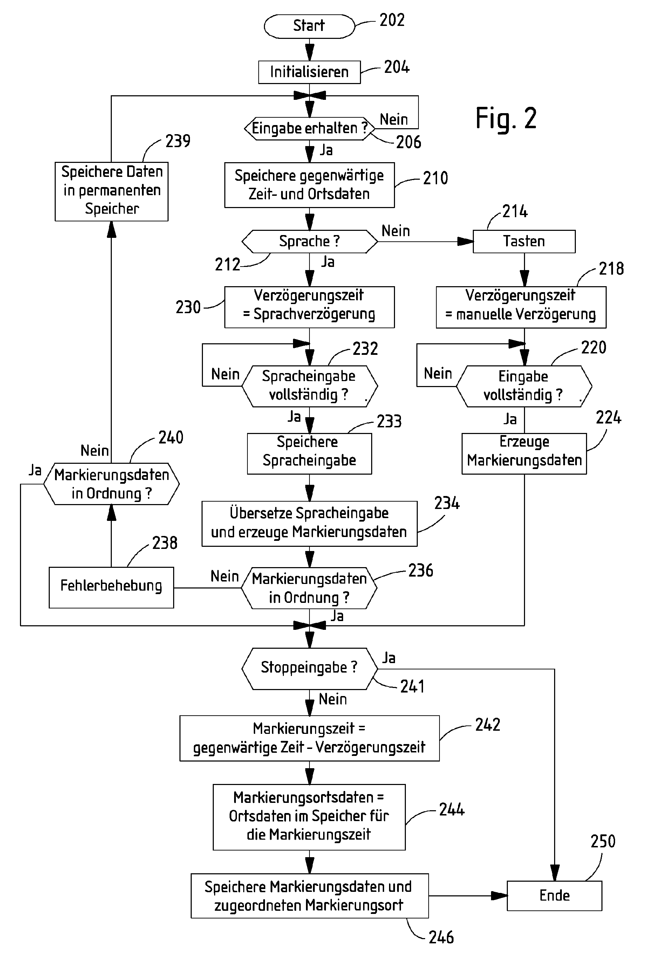

Es wird nun auf die Figur 2 Bezug genommen, nach der die Verarbeitungseinheit 14 außerdem einen Algorithmus 200 zum Setzen von Markierungen ausführt, der Daten für Markierungen verarbeitet und speichert, die unterschiedliche Merkmale auf einem landwirtschaftlich genutzten Feld oder einer anderen Fläche repräsentieren, über das oder die sich das Fahrzeug 10 bewegt. Eine Markierung kann eine "Punkt-Markierung" sein, um einen spezifischen Punkt auf dem Feld zu markieren, oder es kann eine "Flächen-Markierung" sein, um die Grenze einer Fläche zu markieren, auf die bestimmte Bedingungen zutreffen. Die Umsetzung des Flussdiagramms aus Figur 2 in eine Standardsprache zur Implementierung des vom Flussdiagramm beschriebenen Algorithmus auf einem Digitalcomputer oder Mikroprozessor ist für einen normal ausgebildeten Fachmann ohne Schwierigkeiten möglich.

Nach dem Start im Schritt 202 und der Initialisierung im Schritt 204 veranlasst der Schritt 206 den Algorithmus abzuwarten, bis eine Eingabe entweder vom Mikrofon 22 (Sprachschnittstelle) oder über berührungsempfindliche Eingabemittel der Schnittstelle 28 oder der Anzeige-, Steuer- und Eingabetasteneinheit 30 (manuelle Schnittstellen) empfangen wird. Wenn eine Eingabe empfangen wird, leitet die Subroutine 206 den Algorithmus zum Schritt 210, der an einem temporären Speicherstandort die Daten hinsichtlich der gegenwärtigen Zeit und des gegenwärtigen Orts von der GPS-Einheit 16 abspeichert.

Wenn die Eingabe eine Spracheingabe über das Mikrofon 22 war, leitet der Schritt 212 den Algorithmus zu Schritt 230, sonst zu Schritt 214.

Wenn die Eingabe eine manuelle Eingabe über die berührungsempfindlichen Eingabemittel war, führt der Schritt 214 den Algorithmus zum Schritt 218, der einen Verzögerungszeitwert entsprechend einer vorbestimmten, gespeicherten manuellen Verzögerungszeit setzt, wie beispielsweise 2 Sekunden. Diese manuelle Verzögerungszeit ist derart gewählt, dass Zeitverzögerungen ausgeglichen werden, die mit mehreren menschlichen und physischen Eigenschaften verbunden sind, einschließlich der Zeit, die erforderlich ist, ein Ereignis zu bemerken (beachten), eine Entscheidung zu fassen, es aufzuzeichnen, und einen Knopf zu drücken, was das System 10 veranlasst, den Start der Dateneingabe aufzuzeichnen.

Wie zuvor angemerkt, kann das System andere Eingabemittel (nicht gezeigt) umfassen. Wenn das der Fall ist, kann der Algorithmus 200 erweitert werden, so dass er dann zusätzliche Verarbeitungsschritte (nicht gezeigt) und zusätzliche Verzögerungszeiten (nicht gezeigt) für derartige Eingabemittel umfasst.

Nach dem Schritt 218 veranlasst der Schritt 220 den Algorithmus abzuwarten, bis die manuelle Eingabe vollendet ist, woraufhin der Schritt 224 Markierungsdaten erzeugt und abspeichert, die das Merkmal, Ereignis oder den Gegenstand repräsentieren, der vom Bediener signalisiert (markiert) wurde.

Es wird wieder auf den Schritt 212 verwiesen, der den Algorithmus zum Schritt 230 führt, wenn die Eingabe das Ergebnis einer Spracheingabe über das Mikrofon 22 war.

Der Schritt 230 setzt den Verzögerungszeitwert gleich einer vorbestimmten, gespeicherten Sprachverzögerungszeit, wie beispielsweise 1,5 Sekunden. Diese Sprachverzögerungszeit ist derart gewählt, dass Zeitverzögerungen ausgeglichen werden, die mit verschiedenen menschlichen und physischen Eigenschaften verbunden sind, einschließlich der Zeit, die erforderlich ist, ein Ereignis zu bemerken (beachten), eine Entscheidung zu fassen, es aufzuzeichnen, und eine Nachricht in das Mikrofon 22 zu sprechen, was das System 10 veranlasst, den Start der Dateneingabe zu bemerken. Die Sprachverzögerungszeit wird normalerweise kürzer sein als die manuelle Verzögerungszeit.

Der Schritt 232 veranlasst den Algorithmus abzuwarten, bis die Spracheingabe vollendet wurde, woraufhin im Schritt 233 die ursprüngliche, unverarbeitete Spracheingabe an einem temporären Speicherstandort abgespeichert wird.

Der Schritt 234 übersetzt die abgespeicherte Spracheingabe unter Verwendung bekannter Spracherkennungstechniken und erzeugt Markierungsdaten, die das Merkmal, Ereignis oder den Gegenstand repräsentieren, das durch die Sprache des Bedieners markiert oder beschrieben wurde. Es gibt eine Anzahl derartiger Techniken, die im Stand der Technik gut bekannt sind, wie Ja/Nein-Fragen, Nachfragen nach einer neuen Ansprache, das Durchgehen von Listen mit n Besten und dergleichen. Derartige Dialoge können eine recht lange Zeit zur Vervollständigung benötigen. Das Endergebnis ist entweder ein Erfolg oder ein Versagen. Obwohl in der Figur 2 nicht dargestellt, könnte der Algorithmus derart entworfen sein, dass es möglich wird, zu einem späteren Zeitpunkt eine weitere Sprachverarbeitung der im Schritt 233 abgespeicherten Spracheingabe durchzuführen, wenn gewünscht.

Der Schritt 236 überprüft die Gültigkeit der im Schritt 234 gespeicherten Markierungsdaten und leitet den Algorithmus zum Schritt 238, wenn die gespeicherten Markierungsdaten einen Fehler enthalten, sonst zum Schritt 241. Der Schritt 238 versucht, fehlerhafte Markierungsdaten zu korrigieren. Falls der Schritt 238 keinen Erfolg hat, die Markierungsdaten zu korrigieren, führt der Schritt 240 den Algorithmus zum Schritt 239, der die in den Schritten 210 und 233 temporär gespeicherten Daten an einem dauerhaften Speicherstandort (nicht gezeigt - beispielsweise eine Festplatte oder ein Flashmemory) ablegt, woraufhin der Algorithmus zum Schritt 206 zurückkehrt, um eine andere Markierungseingabe abzuwarten.

Der Schritt 241 führt den Algorithmus zu einem Ende im Schritt 250, wenn die Markierung ein Stoppkommando ist, sonst zum Schritt 242.

Der Schritt 242 setzt einen Markierungszeitwert oder kompensierten Zeitwert gleich der gegenwärtigen Zeit minus der Verzögerungszeit, wobei die gegenwärtige Zeit der im Schritt 210 gespeicherte Zeitwert und die Verzögerungszeit die Sprachverzögerungszeit oder die manuelle Verzögerungszeit entweder aus Schritt 230 oder Schritt 218 ist.

Als nächstes werden im Schritt 244 aus dem Puffer der Verarbeitungseinheit 14 die dort abgespeicherten, zu den im Schritt 242 berechneten Markierungszeitwert zugehörigen Ortsdaten aufgefunden und als kompensierte oder Markierungsortsdaten benannt.

Schließlich speichert der Schritt 246 die Markierungsdaten und zugehörigen Markierungsortsdaten in der Verarbeitungseinheit 14 als Teil der vom System erzeugten Karte ab. Diese gespeicherten Markierungsorte werden demnach hinsichtlich Verzögerungen und Zeitversätzen kompensiert, die Folge der Zeit sind, die ein Benutzer benötigt, eine Markierungseingabe zu beginnen, sei es per Sprache oder von Hand.

### Betriebsverfahren

Ein Bediener beobachtet ein Objekt, eine Bedingung oder ein Ereignis. Beispielsweise kann ein Landwirt einen unerwünschten Stein, mangelhafte Wasserableitung, eine Beschädigung eines Ziegelsteins oder einer Struktur, Hinweise auf Schädlinge wie Unkraut oder Insekten, eine Beschädigung durch Tiere oder andere interessante Erscheinungen auf einem Feld während der Ernte oder einer für eine Bewirtschaftungsentscheidung durchgeführten Kartierung bemerken. Der Benutzer beabsichtigt, diese Erscheinung zwecks späterer Verwendung zu berichten, beispielsweise um die Menge und den Ort eines Herbizids oder Pestizids festzulegen, eine Reparatur- oder Beseitigungsmannschaft anzuweisen oder die Auswirkungen der Erscheinung auf den Erntegutertrag zu ermitteln. Um diese Information auf eine zeitnahe Weise einzugeben, wirkt der Benutzer mit dem Algorithmus 200 zusammen, indem er in das Mikrofon 22 spricht, eine berührungsempfindliche Taste der manuellen Schnittstelle 28 berührt oder manuell ein anderes mit dem System 10 verbundenes Eingabegerät betätigt, wie beim Drücken eines drahtlosen, Hand gehaltenen Drucktastengeräts (nicht gezeigt) .

Diese Bedienereingabe wird im Schritt 206 bemerkt und der Schritt 210 speichert den genauen Zeitpunkt ab, an dem die Eingabe erfasst wurde, in Verbindung mit der Ortsinformation, wie sie von der GPS-Einheit 16 festgestellt wurde. Nach dem Speichern dieser Information führt das System 10 fort, die Bewegung des Bedieners im Raum zu überwachen, bis zu dem Zeitpunkt, an dem die Bedienereingaben vervollständigt und verarbeitet sind. Die Verarbeitungszeit kann variabler Dauer sein. Für eine manuelle Eingabe kann die Verarbeitungszeit sehr kurz sein - von der Größenordnung von 100 bis 500 Millisekunden. Für eine Spracheingabe kann die Eingabe nicht als komplett angesehen werden, bis der Bediener zu sprechen aufgehört hat und die automatische Spracherkennung die Verarbeitung der Sprache beendet hat. Das können sogar 5 s oder länger sein, abhängig von der Anzahl der Wörter und davon, ob ein Dialog zur Fehlererkennung erforderlich war.

Die Schritte 212 und 214 stellen fest, ob der Bediener eine Sprachnachricht abgibt oder eine manuelle Eingabe über die Tasten durchführt. Da jede Eingabeweise normalerweise unterschiedliche Latenz- oder Verzögerungszeiten haben wird, stellen die Schritte 218, 230, 242 und 244 jeglichen Versatz von den ursprünglich gespeicherten Raumkoordinaten fest, die erforderlich sind, die genaue Stelle des markierten Ereignisses oder Gegenstands festzustellen. Die zwischen dem Moment der Beobachtung einer Erscheinung bis zum Moment des Sprechens oder Niederdrückens einer Taste kann sich von einigen wenigen 100 Millisekunden bis zu einigen Sekunden erstrecken, abhängig von den Bedingungen und dem Kontext der Aufgabe des Bedieners. Während der verstrichenen Zeit bewegen sich das Fahrzeug und der Bediener. Obwohl der Fehler in den Koordinaten für viele Anwendungen vernachlässigbar sein mag, gibt es Bedingungen, bei denen der Fehler wesentlich wird, so wie wenn sich der Bediener schnell bewegt, der Bediener ein beabstandetes Fahrzeug fernsteuert, das die Positionsbestimmungseinheit enthält, der Bediener Tastenkombinationen nachschlagen oder Sprachäußerungen geben muss, um zu lernen, wie er über die Erscheinung berichten soll, oder andere ähnliche Fälle.

Der Schritt 244 verknüpft die neu errechnete Markierungszeit mit den korrekten räumlichen Koordinaten. Der Schritt 246 speichert eine Markierung ab, indem die Ereignis- oder Markierungsinformation und die zugehörigen korrigierten Koordinaten als Dateneintrag abgespeichert werden. Wenn die Daten später durchgesehen werden, wird der Bediener auf der Feldkarte (nicht gezeigt) sehen, dass ein von der Markierung repräsentiertes Objekt, eine Bedingung oder ein Ereignis an einem spezifischen Punkt auf der Karte angeordnet ist.

Während die vorliegende Erfindung in Verbindung mit einer spezifischen Ausführungsform beschrieben wurde, ist es nachvollziehbar, dass dem Fachmann im Lichte der vorhergehenden Beschreibung viele Alternativen, Modifikationen und Veränderungen offensichtlich sind. Die GPS-Einheit könnte durch ein anderes Gerät ersetzt werden, das die Position nachverfolgt, indem die Richtung und Geschwindigkeit der Bewegung oder Entfernung von einer Referenz gemessen werden, oder durch irgendwelche andere Mittel. Der Bediener kann das System 10 tragen oder anhaben, ein mit dem System ausgestattetes Fahrzeug fahren oder in der Nähe eines mit dem System ausgestatteten Fahrzeugs laufen oder fahren.

Wenn ein Schlüsselwort oder eine -phrase gesprochen wird, um die Markierungssetzfunktion der Spracherkennung zu starten, wird eine Markierung erzeugt und abgespeichert, die den Ort und die Zeit des Ereignisses definiert. Die Benennung der Markierung wird durch das vom Bediener gesprochene Wort definiert (d. h. das gesprochene Wort oder Schlüsselwort wird als Benennung der Markierung verwendet), so dass die beabsichtigte Markierung genauer benannt werden kann, um sie mit einem Ort zu verknüpfen. Das heißt, die Positionierung der Markierung ist nicht durch die Zeit beeinflusst, die der Bediener benötigt, um durch ein Anzeigemenü zu navigieren oder durch die Verarbeitungszeit der Verarbeitungseinheit oder mögliche Fehlerbehandlungszeiten eines Spracherkennungssystems.

Das System und der Algorithmus können modifiziert werden, um zur Verwendung durch einen über ein Feld laufenden Benutzer ein drahtloses, Hand gehaltenes Drucktastengerät (nicht gezeigt) und ein tragbares Mikrofon (nicht gezeigt) mit einzuschließen, die mit der Verarbeitungseinheit 14 kommunizieren. Nach der Beobachtung einer zu markierenden Situation, wie Knopfunkraut, drückt der Benutzer die Taste, um eine Markierungsaktion zu initiieren. Der Benutzer sagt dann "Knopfunkraut" in das tragbare Mikrofon und das System legt am Ende der Ansprache eine Zeitverzögerung fest. Das System würde diese Zeitverzögerung verwenden, um korrigierte, zeitberichtigte Ortskoordinaten festzustellen. Eine "Knopfunkraut"-Markierung wird dann den korrigierten, zeitberichtigten Ortskoordinaten zugeordnet.

Das beschriebene System kann auch dahingehend modifiziert werden, dass es mehrere, nacheinander gesprochene oder manuell eingegebene Markierungen mit einem einzigen Ort verknüpft, wie "Knopfunkraut" gefolgt von "Nachtschatten", aber beide mit derselben Stelle im Feld verknüpft.

Figurentexte
Fig. 1
   16 GPS-System
   22 Mikrofon
   24 Lautsprecher
   30 Anzeige
Fig. 2
   202 Start
   204 Initialisieren
   206 Eingabe erhalten?
   210 Speichere gegenwärtige Zeit- und Ortsdaten
   212 Sprache?
   214 Tasten
   218 Verzögerungszeit = manuelle Verzögerung
   220 Eingabe vollständig?
   224 Erzeuge Markierungsdaten
   230 Verzögerungszeit = Sprachverzögerung
   232 Spracheingabe vollständig?
   233 Speichere Spracheingabe
   234 Übersetze Spracheingabe und erzeuge Markierungsdaten
   236 Markierungsdaten in Ordnung?
   238 Fehlerbehebung
   239 Speichere Daten in permanentem Speicher
   240 Markierungsdaten in Ordnung?
   241 Stoppeingabe?
   242 Markierungszeit = gegenwärtige Zeit - Verzögerungszeit
   244 Markierungsortsdaten = Ortsdaten im Speicher für die Markierungszeit
   246 Speichere Markierungsdaten und zugeordneten Markierungsort
   250 Ende

## Patentansprüche

1. Verfahren zur Abspeicherung von Markierungen in einem Kartierungssystem, das über ein Gelände bewegbar ist und eine Ortsdaten erzeugende geographische Ortsbestimmungseinheit, z. B. eine GPS-Einheit (16), mehrere Dateneingabeschnittstellen (22, 28, 30) und eine Verarbeitungseinheit (14) umfasst, die mit der Ortsbestimmungseinheit und den Dateneingabeschnittstellen (22, 28, 30) verbunden ist und eine Karte erzeugt, mit folgenden Schritten:
als Reaktion auf den Beginn einer Markierungsdateneingabe mittels einer der Dateneingabeschnittstellen (22, 28, 30) werden gegenwärtige Zeitdaten abgespeichert,
nach Vervollständigung der Markierungsdateneingabe mittels der Dateneingabeschnittstelle (22, 28, 30) werden die Markierungsdaten analysiert und erhaltene Markierungsdaten abgespeichert,
kompensierte Zeitdaten werden abhängig von den abgespeicherten gegenwärtigen Zeitdaten und einer Zeitverzögerung abgespeichert, die davon abhängt, welche der Dateneingabeschnittstellen (22, 28, 30) benutzt wurde,
abhängig von den kompensierten Zeitdaten werden kompensierte Ortsdaten bestimmt, und
die kompensierten Ortsdaten werden verknüpft mit den gespeicherten erhaltenen Markierungsdaten abgespeichert.

2. Verfahren nach Anspruch 1, **dadurch gekennzeichnet, dass** eine der Dateneingabeschnittstellen eine Spracheingabeschnittstelle mit einem Mikrofon (22) ist, und dass die Verarbeitungseinheit eine Spracherkennungsfunktion durchführt.

3. Verfahren nach Anspruch 1 oder 2, **dadurch gekennzeichnet, dass** eine der Dateneingabeschnittstellen eine durch eine Hand oder Finger eines Bedieners bedienbare manuelle Schnittstelle (28, 30) umfasst.

4. Verfahren nach einem der Ansprüche 2 oder 3, **dadurch gekennzeichnet, dass** die Verarbeitungseinheit (14) eine erste vorbestimmte Zeitverzögerung verwendet, wenn die Spracheingabeschnittstelle durch einen Bediener verwendet wird, dass die Verarbeitungseinheit (14) eine zweite vorbestimmte Zeitverzögerung verwendet, wenn die manuelle Schnittstelle (28) durch einen Bediener verwendet wird, und dass die zweite Zeitverzögerung größer als die erste Zeitverzögerung ist.

5. Verfahren nach einem der Ansprüche 2 bis 4, **dadurch gekennzeichnet, dass** die Verarbeitungseinheit (14) einen Fehlerkorrekturprozess durchführt, um eine richtige erhaltene Spracheingabe zu erzielen, falls das Ergebnis der von der Verarbeitungseinheit (14) durchgeführten Spracherkennungsfunktion fehlerhaft ist.

6. Verfahren nach Anspruch 5, **dadurch gekennzeichnet, dass** die Verarbeitungseinheit (14) eine richtige erhaltene Spracheingabe abspeichert, falls der Fehlerkorrekturprozess eine richtige erhaltene Spracheingabe zum Ergebnis hat, und die richtige erhaltene Spracheingabe mit den kompensierten Ortsdaten abspeichert.

7. Verfahren nach Anspruch 5 oder 6, **dadurch gekennzeichnet, dass** die Verarbeitungseinheit (14) eine erhaltene Spracheingabe abspeichert, falls der Fehlerkorrekturprozess keine richtige erhaltene Spracheingabe zum Ergebnis hat, und die erhaltene Spracheingabe mit den kompensierten Ortsdaten abspeichert.

8. Kartierungssystem, betreibbar nach einem Verfahren nach einem der Ansprüche 1 bis 7.
